# EUROPÄISCHE PATENTSCHRIFT

(11) **EP 2 850 253 B1**
(45) Veröffentlichungstag und Bekanntmachung des Hinweises auf die Patenterteilung: **01.06.2016**
(21) Anmeldenummer: 13736766.0
(22) Anmeldetag: 02.07.2013
(51) Int. Cl.: E03C 1/08, G05D 7/01

(54) **LÄNGLICHER DURCHFLUSSMENGENREGLER MIT STEG- ODER SCHNURFÖRMIGEN DROSSELKÖRPER**
ELONGATE CONTINUOUS FLOW CONTROLLER WITH WEB-SHAPED OR STRING-SHAPED FLOW RESTRICTOR
RÉGULATEUR DE DÉBIT ALLONGÉ COMPRENANT UN ÉLÉMENT D'ÉTRANGLEMENT EN FORME DE BARRETTE OU DE CORDON

(30) Priorität: 10.08.2012 DE 202012007719 U
(43) Veröffentlichungstag der Anmeldung: 25.03.2015
(73) Patentinhaber: Neoperl GmbH, 79379 Müllheim (DE)
(72) Erfinder: HART, Keith, Welland Worcestershire WR 13 6NE Vereinigtes Königreich (GB)
(74) Vertreter: Börjes-Pestalozza, Henrich
(86) Internationale Anmeldenummer: PCT/EP2013/001929
(87) Internationale Veröffentlichungsnummer: WO 2014/023378

(56) Entgegenhaltungen:
- DE-A1-102007 047 112
- DE-C1- 10 228 490
- FR-A5- 2 117 611

## Beschreibung

Die Erfindung betrifft eine sanitäre Einsetzeinheit mit einem Einsetzgehäuse, das in eine sanitäre Versorgungsleitung einsetzbar ist und das einen Durchflussmengenregler aufweist, der wenigstens eine, von einem Fluid durchströmte Durchflussöffnung hat, in welcher Durchflussöffnung ein Drosselkörper vorgesehen ist, der in einer quer zur Durchströmrichtung orientierten Einbauebene angeordnet ist, wobei wenigstens ein Steuerspalt vorgesehen ist, der zwischen einer zumindest abschnittsweise profilierten oder konturierten, die Durchflussöffnung begrenzenden Wandung und einer benachbarten Außenseite des Drosselkörpers angeordnet ist, und wobei der Drosselkörper unter dem Druck des durchströmenden Mediums derart elastisch verformbar ist, dass sich der lichte Durchflussquerschnitt des Steuerspalts durch Einformen des Drosselkörpers in die Profilierung oder Konturierung der zumindest bereichsweise profilierten oder konturierten Wandung verengt.

Man kennt bereits verschiedene Einsetzeinheiten, die mit einem Einsetzgehäuse am Wasserauslauf einer sanitären Auslaufarmatur montierbar sind. Die vorbekannten Einsetzeinheiten weisen einen Strahlregler auf, der das aus dem Leitungsnetz zuströmende Wasser am Wasserauslauf zu einem homogenen, nicht-spritzenden und gegebenenfalls perlend-weichen Wasserstrahl zu formen hat. Um das aus dem Wasserauslauf austretende Wasservolumen unabhängig vom Wasserdruck auf einen festgelegten Maximalwert pro Zeiteinheit einzuregeln, ist dem Strahlregler zuströmseitig ein Durchflussmengenregler vorgeschaltet.

So kennt man aus der FR 2 117 611 A5 bereits eine sanitäre Einsetzeinheit der eingangs erwähnten Art, die in einem kreisrunden Gehäuseabschnitt ihres Einsetzgehäuses einen Durchflussmengenregler mit einem aus elastischen Material hergestellten ringförmigen Drosselkörper aufweist, der zwischen sich und einer profilierten oder konturierten Gehäusewandung einen Steuerspalt begrenzt. Unter dem Druck des durchströmenden Wassers vermag sich der elastische Drosselkörper derart in die Profilierungen oder Konturierungen der den Steuerspalt begrenzenden Wandung einzuformen, dass sich der Steuerspalt mit steigendem Druck zunehmend verengt.

Die Ringform des aus elastischem Material hergestellten Drosselkörpers bedingt bei der aus FR 2 117 611 A5 vorbekannten Einsetzeinheit jedoch einen kreisrunden Gehäusequerschnitt des Einsetzgehäuses.

Aus der DE 102 28 490 C1 kennt man eine sanitäre Einsetzeinheit mit einem Einsetzgehäuse, in dem zwei koaxiale Durchflussmengenregler mit jeweils einem ringförmigen Drosselkörper aus elastischem Material vorgesehen sind. Dabei umgreift der außenliegende Drosselkörper einen zentralen Steuerzapfen, in dem eine Durchtrittsöffnung vorgesehen ist, in welcher der zweite innenliegende Drosselkörper angeordnet ist. Entsprechend der Kreisform der beiden koaxialen Drosselkörper weist auch das Einsetzgehäuse dieser aus DE 102 28 490 C1 vorbekannten Einsetzeinheit einen kreisrunden Gehäusequerschnitt auf.

Man hat auch bereits sanitäre Auslaufarmaturen geschaffen, die hohen ästhetischen Ansprüchen genügen sollen und die deshalb einen im Querschnitt rechteckigen Wasserauslauf haben, dessen gegenüberliegenden Längsseiten eine im Vergleich zu den quer zur Längserstreckung orientierten und die Breitseiten bildenden Wandungen größere Länge aufweisen. Um auch das aus einem solchen Wasserauslauf austretende Wasser zu einem homogenen, nicht-spritzenden und gegebenenfalls perlend-weichen Wasserstrahl zu formen, hat man bereits in den Wasserauslauf einsetzbare Strahlregler geschaffen, deren Strahlreglergehäuse einen formangepassten und somit rechteckigen Gehäusequerschnitt hat.

So ist aus der DE 10 2007 047 112 A1 bereits ein Strahlregler vorbekannt, dessen Strahlreglergehäuse einen rechteckigen und dadurch an die im lichten Querschnitt ebenfalls rechteckige Auslaufarmatur formangepassten Gehäusequerschnitt aufweist. Die zuströmseitige Stirnseite des Strahlreglergehäuses wird durch eine Verteilerfläche gebildet, die eine Vielzahl von Durchflusslöchern hat und die zum Verteilen des zuströmenden Wassers auf den rechteckigen Durchflussquerschnitt bestimmt ist. Im Armaturengehäuse ist in Strömungsrichtung vor dem Strahlregler und mit Abstand zu diesem ein Durchflussmengenregler vorgesehen. Dieser Durchflussmengenregler ist mit seinem im Querschnitt kreisrunden Einsetzgehäuse in einen im lichten Querschnitt runden Leitungsabschnitt eingesetzt.

Der lichte Durchflussquerschnitt eines runden Durchflussmengenreglers kann jedoch im Vergleich zum Durchflussquerschnitt eines Rechteckstrahlreglers zu gering sein. Auch sind Turbulenzen, die sich beim Übergang von dem runden Durchflussquerschnitt des Durchflussmengenreglers in den rechteckigen Durchflussquerschnitt eines Rechteckstrahlreglers ergeben können, insbesondere im Bereich des Wasserauslaufs unerwünscht.

Es besteht daher insbesondere die Aufgabe, eine sanitäre Einsetzeinheit der eingangs erwähnten Art zu schaffen, die jedenfalls bei unrunden Leitungsquerschnitten vorteilhaft verwendbar ist.

Die erfindungsgemäße Lösung dieser Aufgabe besteht bei der Einsetzeinheit der eingangs erwähnten Art insbesondere darin, dass die Durchflussöffnung als ein, mit seiner Längserstreckung quer zur Durchflussrichtung orientiertes Langloch ausgestaltet ist, dass der Drosselkörper steg- oder schnurförmig ausgebildet ist, und dass der Drosselkörper mit seinen Steg- oder Schnurenden derart an den quer zur Längserstreckung der Durchflussöffnung orientierten Wandungsabschnitten gehalten ist, dass der Drosselkörper im Bereich des Langloches in dessen Längserstreckung orientiert ist.

Die erfindungsgemäße Einsetzeinheit weist ein Einsetzgehäuse auf, das in eine sanitäre Versorgungsleitung einsetzbar ist. Dabei kann das Einsetzgehäuse so ausgestaltet sein, dass die erfindungsgemäße Einsetzeinheit beispielsweise am Wasserauslauf einer sanitären Auslaufarmatur und somit an der Mündung der sanitären Versorgungsleitung oder mit Abstand davon im Verlauf der Versorgungsleitung eingesetzt werden kann. Die erfindungsgemäße Einsetzeinheit weist einen Durchflussmengenregler auf, der entweder Bestandteil der erfindungsgemäßen Einsetzeinheit ist oder deren einziges Funktionselement sein kann. Der Durchflussmengenregler weist eine von Wasser oder einem Gas und somit von einem Fluid durchströmte Durchflussöffnung auf, die als ein, mit seiner Längserstreckung quer zur Durchflussrichtung orientiertes Langloch und somit unrund und keinesfalls ringförmig ausgestaltet ist. In dieser Durchflussöffnung ist ein Drosselkörper vorgesehen, der steg- oder schnurförmig ausgebildet ist und deshalb an gegenüberliegenden Seiten jeweils ein freies Steg- oder Schnurende hat. Dieser langgestreckte Drosselkörper ist in einer quer zur Durchströmrichtung orientierten Einbauebene angeordnet. Wenigstens zwischen einer zumindest abschnittsweise profilierten oder konturierten, die Durchflussöffnung begrenzenden Wandung und der benachbarten Außenseite des Drosselkörpers ist ein Steuerspalt vorgesehen. Dabei ist der Drosselkörper unter dem Druck des durchströmenden Mediums derart elastisch verformbar, dass sich der lichte Durchflussquerschnitt des zumindest einen, vom Fluid durchströmten Steuerspalts durch Einformen des Drosselkörpers in die Profilierung oder Konturierung der zumindest bereichsweise profilierten oder konturierten Wandung mit steigendem Druck des zuströmenden Fluids zunehmend verengt.

Erfindungsgemäß ist vorgesehen, dass der Drosselkörper mit seinen Steg- oder Schnurenden derart an den quer zur Längserstreckung der Durchflussöffnung orientierten Wandungsabschnitten gehalten ist, dass der Drosselkörper im Bereich des Langloches in dessen Längserstreckung orientiert ist. Dadurch ist der in der Durchflussöffnung befindliche Drosselkörper derart gesichert in seiner Position gehalten, dass er stets funktionsgerecht mit dem profilierten oder konturierten Bereich der die Durchflussöffnung begrenzenden Wandung zusammenwirken kann.

Aufgrund der elastischen Verformbarkeit des vorzugsweise aus elastischem Material hergestellten Drosselkörpers löst sich dieser bei wieder fallenden Druck aus der Konturierung oder Profilierung, sodass der Steuerspalt zunehmend freigegeben und die Durchflussleistung in einem Druckbereich auf einen festgelegten Wert eingeregelt wird. Da einerseits die Durchflussöffnung und andererseits der Drosselkörper langgestreckt und keinesfalls ringförmig ausgestaltet sind, lässt sich die erfindungsgemäße Einsetzeinheit insbesondere in Verbindung mit einem unrunden langgestreckten Durchflussquerschnitt verwenden, ohne darauf beschränkt zu sein.

Um den Regelquerschnitt möglichst groß auslegen zu können, ist es vorteilhaft, wenn der in der zumindest einen Durchflussöffnung angeordnete Drosselkörper beidseits seiner Längsseiten zwischen sich und der benachbarten Wandung jeweils einen Steuerspalt begrenzt. Möglich ist aber auch, dass ein solcher Steuerspalt nur entlang der einen Längsseite des Drosselkörpers vorgesehen ist.

Eine bevorzugte Ausführungsform, bei der sich der Drosselkörper besonders gut in die Konturierung oder Profilierung einformen kann, sieht vor, dass die auf beiden Längsseiten des Drosselkörpers angeordneten Wandungen eine Konturierung mit V- oder W-förmigen Konturierungsabschnitten hat, welche Konturierungsabschnitte wechselweise auf gegenüberliegenden Längsseiten des Drosselköpers angeordnet sind und dass die Öffnungen dieser V- oder W-förmigen Könturierungsabschnitte in Richtung zum Drosselkörper weisen.

Damit die Verformbarkeit des Drosselkörpers sich auf das Einregeln der Durchflussleitung konzentrieren kann, ist es vorteilhaft, wenn der Drosselkörper in Durchflussrichtung unverrückbar und quer zur Durchflussrichtung elastisch verformbar in der Durchflussöffnung gehalten ist.

Eine bevorzugte Ausführungsform gemäß der Erfindung sieht dazu vor, dass der Drosselkörper auf einer im Bereich der Durchflussöffnung angeordneten Loch- oder Gitterstruktur aufliegt.

Damit der Drosselkörper stets in seiner Regelposition gesichert ist, ist es zweckmäßig, wenn der Drosselkörper zuströmseitig mittels zumindest einem Niederhalter entgegen der Durchströmrichtung in der Durchflussöffnung gesichert ist.

Damit gelöste Kalkablagerungen oder im Fluid mitgerissene Schmutzartikel sich nicht im Bereich des Steuerspalts festsetzen und die Funktion der erfindungsgemäßen Einsetzeinheit beeinträchtigen können, ist es vorteilhaft, wenn das Einsetzgehäuse zuströmseitig mit einem Vorsatz- oder Filtersieb lösbar verbindbar ist.

Dabei ist es besonders vorteilhaft, wenn an dem Vorsatz- oder Filtersieb abströmseitig ein Niederhalter vorgesehen ist.

Eine bevorzugte Ausführungsform gemäß der Erfindung sieht vor, dass zumindest ein Niederhalter als ein in Durchflussrichtung orientierter und an das Vorsatz- oder Filtersieb einstückig angeformter Niederhalterzapfen ausgebildet ist.

Um den in Längsrichtung der Durchflussöffnung orientierten Drosselkörper beidseits an den kurzen Breitseiten der die Durchflussöffnung umgrenzenden Wandungen und Wandungsabschnitte einspannen oder montieren zu können, besteht eine bevorzugte Weiterbildung gemäß der Erfindung darin, dass die Steg- oder Schnurenden des steg- oder schnurförmigen Drosselkörpers eine Verdickung aufweisen und dass die Verdickungen des Drosselkörpers in Halteöffnungen des Durchflussmengenreglers gehalten sind.

Zweckmäßig ist es, wenn die Durchflussöffnung beidseits an ihren quer zur Längserstreckung orientierten Wandungsabschnitten in den Halteöffnungen mündet.

Die erfindungsgemäße Einsetzeinheit kann zwar auch ein im Querschnitt kreisrundes Einsetzgehäuse aufweisen. Um die erfindungsgemäße Einsetzeinheit jedoch möglichst kompakt ausgestalten zu können, ist es vorteilhaft, wenn das Einsetzgehäuse zumindest in einem Teilbereich einen rechteckigen Querschnitt hat, und wenn die Längsseiten des Einsetzgehäuses dazu im Vergleich zu den quer zur Längserstreckung des Einsetzgehäuses orientierten Breitseiten eine größere Länge aufweisen.

Bei einer solchen Ausführung gemäß der Erfindung kann es vorteilhaft sein, wenn das Einsetzgehäuse mehrteilig ausgestaltet ist und ein Strahlreglergehäuse sowie ein mit dem Strahlreglergehäuse lösbar verbindbares Mengenreglergehäuse aufweist.

Eine bevorzugte Ausführungsform gemäß der Erfindung sieht vor, dass der Strahlregler als belüfteter Strahlregler ausgebildet ist, der einen das zuströmende Wasser in eine Vielzahl von Einzelstrahlen aufteilenden Strählzerleger aufweist, und wenn das Einsetzgehäuse wenigstens eine Belüftungsöffnung hat, die in einem dem Strahlzerleger unmittelbar nachfolgenden Gehäuseteilbereich angeordnet ist.

Vorteilhaft ist es, wenn der Drosselkörper zumindest in einem insbesondere zwischen den Schnur- oder Stegenden des Drosselkörpers angeordneten Teilbereich einen runden oder ovalen Querschnitt hat.

Weiterbildungen gemäß der Erfindung ergeben sich aus den

Ansprüchen in Verbindung mit den Figuren sowie der Beschreibung.

Nachstehend wird die Erfindung anhand eines bevorzugten Ausführungsbeispiels noch näher beschrieben.

Es zeigt:
- Fig. 1:: eine in einem Längsschnitt dargestellte sanitäre Einsetzeinheit, die einen Durchflussmengenregler hat, dem zustömseitig ein Vorsatz- oder Filtersieb vorgeschaltet und dem abströmseitig ein Strahlregler nachgeordnet ist, wobei das Vorsatz- oder Filtersieb mit einem Mengenreglergehäuse und das Mengenreglergehäuse des Durchflussmengenreglers mit einem Strahlreglergehäuse des Strahlreglers lösbar verbindbar ist,
- Fig. 2:: die Einsetzeinheit aus Fig. 1 in einer Draufsicht auf die Zuströmseite des Durchflussmengenreglers, wobei das Vorsatz- oder Filtersieb entfernt wurde,
- Fig. 3:: die Einsetzeinheit aus Fig. 1 und 2 in einem gegenüber Fig. 1 um 90° gedrehten Längsschnitt,
- Fig. 4:: die Einsetzeinheit aus Fig. 1 bis 3 in einem Detail-Längsschnitt im Bereich des einerseits mit dem Vorsatz- oder Filtersieb und andererseits mit dem Strahlregler lösbar verbundenen Durchflussmengenreglers, und
- Fig. 5:: den Durchflussmengenregler der in Fig. 1 bis 4 gezeigten Einsetzeinheit in einer perspektivischen

### Draufsicht auf seine Bestandteile.

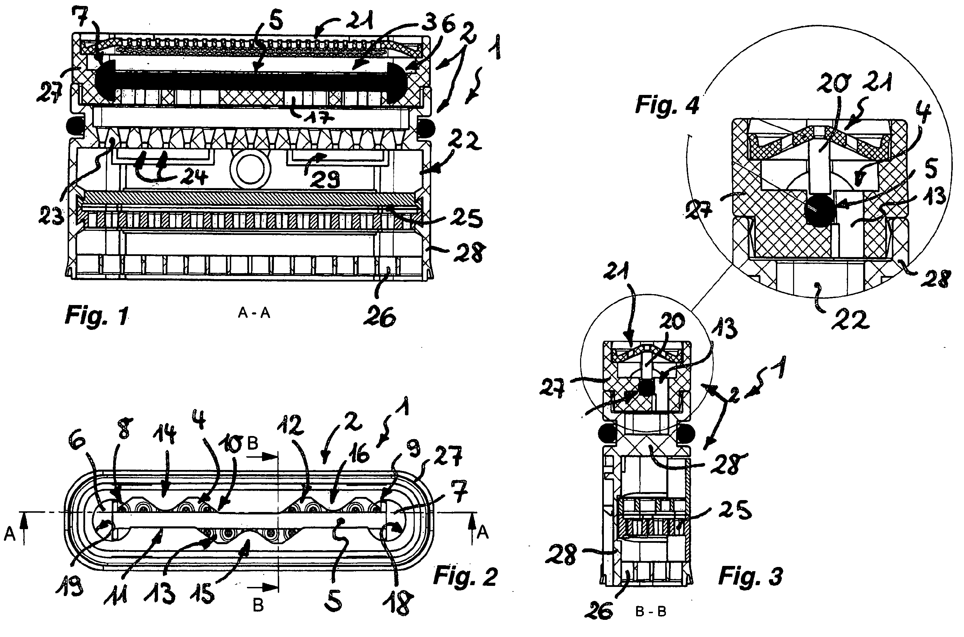

In den Fig. 1 bis 5 ist eine sanitäre Einsetzeinheit 1 und deren Bestandteile dargestellt. Die Einsetzeinheit 1 weist ein Einsetzgehäuse 2 auf, das in eine sanitäre Versorgungsleitung einsetzbar ist.

Das hier dargestellte. Einsetzgehäuse 1 ist so ausgestaltet, dass es in den rechteckigen lichten Auslaufquerschnitt eines Wasserauslaufs einsetzbar ist, welcher den abströmseitigen Endbereich einer hier nicht weiter gezeigten sanitären Auslaufarmatur bildet.

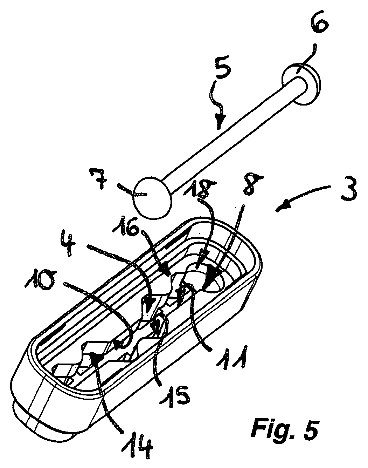

Die hier gezeigte Einsetzeinheit 1 weist einen Durchflussmengenregler 3 auf, der einen der Bestandteile der Einsetzeinheit 1 bildet. Der in Fig. 5 näher gezeigte Durchflussmengenregler 3 hat eine Durchflussöffnung 4, die von dem durch die Versorgungsleitung her zuströmenden Wasser durchströmt wird. Die Durchflussöffnung 4 ist als ein, mit seiner Längserstreckung quer zur Durchflussrichtung orientiertes Langloch ausgebildet und somit unrund und keinesfalls ringförmig ausgestaltet. In dieser Durchflussöffnung 4 ist ein Drosselkörper 5 vorgesehen, der steg- oder schnurförmig ausgebildet ist und deshalb an den gegenüberliegenden Seiten zwei freie Steg- oder Schnurenden 6, 7 hat.

Dieser langgestreckte Drosselkörper 5 ist in einer quer zur Durchströmrichtung orientierten Einbauebene angeordnet und mit seinen Steg- oder Schnurenden 6, 7 derart an den quer zur Längserstreckung der Durchflussöffnung 4 orientierten, die demgegenüber kürzeren Breitseiten bildenden Wandungsabschnitten 8, 9 gehalten, das der Drosselkörper 5 im Bereich des Langloches in dessen Längserstreckung orientiert ist.

Zwischen wenigstens einer zumindest abschnittsweise profilierten oder konturierten, die Durchflussöffnung 4 begrenzenden Wandung 10, 11 und der benachbarten Außenseite des Drosselkörpers 5 ist jeweils ein Steuerspalt 12, 13 vorgesehen. Dabei ist Drosselkörper 5 unter dem Druck des durchströmenden Wassers derart elastisch verformbar, dass sich der lichte Durchflussquerschnitt des vom Wasser durchströmten Steuerspaltes 12, 13 durch Einformen des Drosselkörpers 5 in die Profilierung oder Konturierung der zumindest bereichsweise profilierten oder konturierten Wandung 10, 11 mit steigendem Wasserdruck zunehmend verengt. Aufgrund der elastischen Verformbarkeit des vorzugsweise aus elastischem Material hergestellten Drosselkörpers 5 löst sich dieser bei wieder fallendem Druck aus der Konturierung oder Profilierung der Wandungen 10, 11, sodass der zumindest eine Steuerspalt 12, 13 zunehmend freigegeben und die Durchflussleistung auf einen festgelegten Maximalwert eingeregelt wird. Da einerseits die Durchflussöffnung 4 und andererseits der Drosselkörper 5 langgestreckt und keinesfalls ringförmig ausgestaltet sind, lässt sich die erfindungsgemäße Einsetzeinheit 1 vorzugsweise in Verbindung mit einem unrunden und insbesondere langgestreckten Durchflussquerschnitt verwenden, ohne darauf beschränkt zu sein.

Damit der Durchflussmengenregler die Durchflussleistung möglichst gut einregeln kann, ist bei dem hier gezeigten Durchflussmengenregler 3 vorgesehen, dass der in der Durchflussöffnung 4 angeordnete Drosselkörper 5 beidseits seiner Längsseiten zwischen sich und der benachbarten Wandung 10 bzw. 11 jeweils einen Steuerspalt 12, 13 begrenzt. Dabei wird aus den Draufsichten in Fig. 2 und 5 deutlich, dass die auf beiden Längsseiten des Drosselkörpers angeordneten Wandungen 10, 11 eine Konturierung mit hier W-förmigen Konturierungsabschnitten 14, 15, 16 haben, welche Konturierungsabschnitte 14, 15, 16 wechselweise auf gegenüberliegenden Längsseiten des Drosselkörpers 5 angeordnet sind, wobei die Öffnungen dieser W-förmigen Konturierungsabschnitte 14, 15 und 16 in Richtung zum Drosselkörper 5 weisen.

Aus einem Vergleich der Fig. 2 und 5 ist erkennbar, dass der Drosselkörper 5 in Durchflussrichtung unverrückbar und quer zur Durchflussrichtung elastisch verformbar in der Durchflussöffnung 4 gehalten ist. Um den Drosselkörper 5 in Durchflussrichtung unverrückbar in einer Ebene halten zu können, liegt der Drosselkörper 5 auf einer Loch- oder Gitterstruktur 17 im abströmseitigen Bereich der Durchflussöffnung 4 auf. Damit der Drosselkörper 5 in Durchflussrichtung elastisch verformbar bleibt, ist der Drosselkörper 5 zwischen den die kurzen Breitseiten bildenden Wandungsabschnitten 8, 9 gehalten. In den Fig. 1, 2 und 5 ist erkennbar, dass die Steg- oder Schnurenden 6, 7 des steg- oder schnurrförmigen Drosselkörpers 5 jeweils eine Verdickung aufweisen, und dass die endseitigen Verdickungen des Drosselkörpers 5 in Halteöffnungen 18, 19 des Durchflussmengenreglers 3 gehalten sind. Dabei mündet die Durchflussöffnung. 4 beidseits an den quer zur Längserstreckung orientierten Wandungsabschnitten 8, 9 in den Halteöffnungen 18, 19. Damit der Drosselkörper 5 auch entgegen der Durchflussrichtung gesichert ist und nicht auf dem durchströmenden Wasser unkontrolliert aufschwimmen kann, ist der Drosselkörper 5 zuströmseitig mittels zumindest einem Niederhalter 20 entgegen der Durchströmrichtung in der Durchflussöffnung 4 gesichert.

In den Fig. 1, 3 und 4 ist erkennbar, dass das Einsetzgehäuse 2 der Einsetzeinheit 1 zuströmseitig mit einem Vorsatz- oder Filtersieb 21 lösbar verbindbar ist. An diesem Vorsatz- oder Filtersieb 21 ist abströmseitig der Niederhalter 20 vorgesehen. Der Niederhalter 20 ist hier als ein in Durchflussrichtung orientierter und an das Vorsatz- oder Filtersieb 21 einstückig angeformter Niederhalterzapfen ausgebildet.

Aus einem Vergleich der Fig. 2 und 3 wird deutlich, dass das Einsetzgehäuse 2 zumindest in einem Teilbereich und hier über seine gesamte Längserstreckung einen rechteckigen Querschnitt hat und dass die Längsseiten des Einsetzgehäuses dazu im Vergleich zu dessen Gehäuse-Breitseiten eine größere Länge aufweisen.

In den Fig. 1 und 3 ist erkennbar, dass die Einsetzeinheit 1 auch einen Strahlregler 22 aufweist, der dem Durchflussmengenregler 3 in Strömungsrichtung nachgeschaltet ist. Dieser Strahlregler 22 ist hier als belüfteter Strahlregler ausgebildet. Der Strahlregler 22 hat das durchströmende und am Wasserauslauf ausströmende Wasser zu einem homogenen, nicht-spritzenden und hier auch perlend-weichen Wasserstahl zu formen. Der dem Durchflussmengenregler 3 nachgeschaltete Strahlregler 22 hat dazu einen Strahlzerleger 23, der das durchströmende Wasser in eine Vielzahl von Einzelstrahlen aufzuteilen hat. Der hier als Lochplatte ausgestaltete Strahlzerleger 23 weist dazu eine entsprechende Anzahl von Durchflusslöchern 24 auf, in deren Bereich das durchströmende Wasser eine Geschwindigkeitserhöhung erfährt. Durch diese Geschwindigkeitserhöhung der Einzelstrahlen entsteht auf der Abströmseite des Strahlzerlegers 23 ein Unterdruck, der zum Ansaugen von Umgebungsluft durch die Belüftungsöffnungen 29 genutzt wird, welche Umgebungsluft anschließend mit den Einzelstrahlen vermischt werden kann.

Um das mit der Umgebungsluft vermischte Wasser anschließend wieder abbremsen zu können, ist dem Strahlzerleger mit Abstand zumindest eine Gitter- oder Netzstruktur nachgeschaltet, die hier durch ein in das Einsetzgehäuse seitlich einschiebbares Einsetzteil 25 gebildet wird, welches ein wabenzellenförmiges Lochfeld aufweist.

Dem Einsetzteil 25 ist auf der Abströmseite des Strahlreglers ein Strömungsgleichrichter 26 nachgeschaltet, der durch eine hier an das Einsetzgehäuse 2 einstückig angeformte Gitter- oder Netzstruktur gebildet wird und die Einzelstrahlen zu einem homogenen Wasserstrahl zusammenzuführen und zu formen hat. Das Einsetzgehäuse 2 ist mehrteilig ausgestaltet und weist ein Mengenreglergehäuse 27 sowie ein damit lösbar verbindbares Strahlreglergehäuse 28 auf.

### Bezugszeichenliste

- 1: Einsetzeinheit
- 2: Einsetzgehäuse
- 3: Durchflussmengenregler
- 4: Durchflussöffnung
- 5: Drosselkörper
- 6: Stegende (des Drosselkörpers 5)
- 7: Stegende (des Drosselkörpers 5)
- 8: kurzer Wandungsabschnitt (an der Durchflussöffnung 4)
- 9: kurzer Wandungsabschnitt (an der Durchflussöffnung 4)
- 10: Wandung (längsseitig an der Durchflussöffnung 4)
- 11: Wandung (längsseitig an der Durchflussöffnung 4)
- 12: Steuerspalt
- 13: Steuerspalt
- 14: Konturierungsabschnitt
- 15: Konturierungsabschnitt
- 16: Konturierungsabschnitt
- 17: Loch- oder Gitterstruktur
- 18: Halteöffnung (an dem einen Wandungsabschnitt)
- 19: Halteöffnung (an dem anderen Wandungsabschnitt)
- 20: Niederhalter
- 21: Vorsatz- oder Filtersieb
- 22: Strahlregler
- 23: Strahlzerleger
- 24: Durchflusslöcher
- 25: Einsetzteil
- 26: Strömungsgleichrichter
- 27: Mengenreglergehäuse
- 28: Strahlreglergehäuse
- 29: Belüftungsöffnung (am Strahlreglergehäuse 28 des Einsetzgehäuses 2)

## Patentansprüche

1. Sanitäre Einsetzeinheit (1) mit einem Einsetzgehäuse (2), das in eine sanitäre Versorgungsleitung einsetzbar ist und das einen Durchflussmengenregler (3) aufweist, der wenigstens eine, von einem Fluid durchströmte Durchflussöffnung (4) hat, in welcher Durchflussöffnung (4) ein Drosselkörper (5) vorgesehen ist, der in einer quer zur Durchströmrichtung orientierten Einbauebene angeordnet ist, wobei wenigstens ein Steuerspalt (12, 13) vorgesehen ist, der zwischen einer zumindest abschnittsweise profilierten oder konturierten, die Durchflussöffnung (4) begrenzenden Wandung (10, 11) und einer benachbarten Außenseite des Drosselkörpers (5) angeordnet ist, und wobei der Drosselkörper (5) unter dem Druck des durchströmenden Mediums derart elastisch verformbar ist, dass sich der lichte Durchflussquerschnitt des Steuerspalts (12, 13) durch Einformen des Drosselkörpers (5) in die Profilierung und Konturierung der zumindest bereichsweise profilierten oder konturierten Wandung (10, 11) verengt, **dadurch gekennzeichnet, dass** die Durchflussöffnung (4) als ein, mit seiner Längserstreckung quer zur Durchflussrichtung orientiertes Langloch ausgestaltet ist, dass der Drosselkörper (5) steg- oder schnurförmig ausgebildet ist, und dass der Drosselkörper (5) mit seinen Steg- oder Schnurenden (6, 7) derart an den quer zur Längserstreckung der Durchflussöffnung (4) orientierten Wandungsabschnitten (8, 9) gehalten ist, dass der Drosselkörper (5) im Bereich des Langloches in dessen Längserstreckung orientiert ist.

2. Einsetzeinheit nach Anspruch 1, **dadurch gekennzeichnet, dass** der in der zumindest einen Durchflussöffnung (4) angeordnete Drosselkörper (5) beidseits seiner Längsseiten zwischen sich und der benachbarten Wandung (10, 11) jeweils einen Steuerspalt (12, 13) begrenzt.

3. Einsetzeinheit nach Anspruch 1 oder 2, **dadurch gekennzeichnet, dass** die Konturierung der auf beiden Längsseiten des Drosselkörpers angeordneten Wandungen V- oder W-förmige Konturierungsabschnitte (14, 15, 16) hat, welche Konturierungsabschnitte (14, 15, 16) wechselweise auf gegenüberliegenden Längsseiten des Drosselkörpers (5) angeordnet sind und dass die Öffnungen dieser V- oder W-förmigen Konturierungsabschnitte (14, 15, 16) in Richtung zum Drosselkörper (5) weisen.

4. Einsetzeinheit nach einem der Ansprüche 1 bis 3, **dadurch gekennzeichnet, dass** der Drosselkörper (5) in Druchflussrichtung unverrückbar und quer zur Durchflussrichtung elastisch verformbar in der Durchflussöffnung (4) gehalten ist.

5. Einsetzeinheit nach Anspruch 4, **dadurch gekennzeichnet, dass** der Drosselkörper (5) auf einer im Bereich der Durchflussöffnung (4) angeordneten Loch- oder Gitterstruktur (17) aufliegt.

6. Einsetzeinheit nach einem der Ansprüche 1 bis 5, **dadurch gekennzeichnet, dass** der Drosselkörper (5) zuströmseitig mittels zumindest einem Niederhalter (20) entgegen der Durchströmrichtung in der Durchflussöffnung (4) gesichert ist.

7. Einsetzeinheit nach einem der Ansprüche 1 bis 6, **dadurch gekennzeichnet, dass** das Einsetzgehäuse (2) zuströmseitig mit einem Vorsatz- oder Filtersieb (21) lösbar verbindbar ist.

8. Einsetzeinheit nach Anspruch 7, **dadurch gekennzeichnet, dass** der zumindest eine Niederhalter (20) an dem Vorsatz- oder Filtersieb (21) abströmseitig vorgesehen ist.

9. Einsetzeinheit nach Anspruch 8, **dadurch gekennzeichnet, dass** der zumindest eine Niederhalter (20) als ein in Durchflussrichtung orientierter und an das Vorsatz- oder Filtersieb (21) einstückig angeformter Niederhalterzapfen ausgebildet ist.

10. Einsetzeinheit nach einem der Ansprüche 1 bis 9, **dadurch gekennzeichnet, dass** die Steg- oder Schnurenden (6, 7) des steg- oder schnurförmigen Drosselkörpers (5) eine Verdickung aufweisen, und dass die Verdickungen des Drosselkörpers (5) in Halteöffnungen (18, 19) des Durchflussmengenreglers (3) gehalten sind.

11. Einsetzeinheit nach Anspruch 10, **dadurch gekennzeichnet, dass** die Durchflussöffnung (4) beidseits an ihren quer zur Längserstreckung orientierten Wandungsabschnitten (8, 9) in den Halteöffnungen (18, 19) mündet.

12. Einsetzeinheit nach einem der Ansprüche 1 bis 11, **dadurch gekennzeichnet, dass** das Einsetzgehäuse (2) zumindest in einem Teilbereich einen rechteckigen Querschnitt hat, und dass die Längsseiten des Einsetzgehäuses dazu im Vergleich zu den quer zur Längserstreckung des Einsetzgehäuses (2) orientierten Breitseiten eine größere Länge aufweisen.

13. Einsetzeinheit nach einem der Ansprüche 1 bis 12, **dadurch gekennzeichnet, dass** die Einsetzeinheit (1) einen Strahlregler (22) aufweist, der dem Durchflussmengenregler (3) in Strömungsrichtung vorzugsweise nachgeschaltet ist.

14. Einsetzeinheit nach Anspruch 13, **dadurch gekennzeichnet, dass** das Einsetzgehäuse (2) mehrteilig ausgestaltet ist und ein Mengenreglergehäuse (27) sowie ein mit dem Mengenreglergehäuse (27) vorzugsweise lösbar verbindbares Strahlreglergehäuse (28) aufweist.

15. Einsetzeinheit nach Anspruch 13 oder 14, **dadurch gekennzeichnet, dass** der Strahlregler (22) als belüfteter Strahlregler (22) ausgebildet ist, der einen das zuströmende Wasser in eine Vielzahl von Einzelstrahlen aufteilenden Strahlzerleger (23) aufweist, und dass das Einsetzgehäuse (2) wenigstens eine Belüftungsöffnung (29) hat, die in einem dem Strahlzerleger (23) unmittelbar nachfolgenden Gehäuseteilbereich angeordnet ist.

16. Einsetzeinheit nach einem der Ansprüche 1 bis 15, **dadurch gekennzeichnet, dass** der Drosselkörper (5) zumindest in einem insbesondere zwischen seinen Steg- oder Schnurenden (6, 7) angeordneten Teilbereich einen runden oder ovalen Querschnitt aufweist.

## Claims

1. Sanitary insert unit (1) comprising an insert housing (2) which is insertable into a sanitary supply line and which comprises a through-flow regulator (3) which has at least one through-flow opening (4) through which a fluid flows, a flow restrictor (5) being provided in the through-flow opening (4) and being arranged in an installation plane which is transversely oriented to the direction of through-flow, wherein at least one control gap (12, 13) is provided which is arranged between a wall (10,11), which at least in sections is profiled or contoured and delimits the through-flow opening (4), and an adjacent outer side of the flow restrictor (5), and wherein the flow restrictor (5), under the pressure of the medium flowing therethrough, is elastically deformable in such a manner that, by forming the flow restrictor (5) into the profiling and contour of the wall (10,11) which at least in sections is profiled or contoured, the clear through-flow cross-section of the control gap (12, 13) is narrowed, **characterised in that** the through-flow opening (4) is configured as an elongate hole which has its longitudinal extension transversely oriented to the through-flow direction, **in that** the flow restrictor (5) is configured in the shape of a web or string, and **in that** the flow restrictor (5) is held on the wall sections (8, 9) transversely oriented to the longitudinal extension of the through-flow opening (4) by its web ends or string ends (6, 7) in such a manner that the flow restrictor (5), in the region of the elongate hole, is oriented in the longitudinal extension thereof.

2. Insert unit as claimed in claim 1, **characterised in that** the flow restrictor (5) arranged in the at least one through-flow opening (4) delimits, on both sides of longitudinal sides thereof, in each case a control gap (12, 13) between itself and the adjacent wall (10, 11).

3. Insert unit as claimed in claim 1 or 2, **characterised in that** the contouring of the walls which are arranged on both longitudinal sides of the flow restrictor has V-shaped or W-shaped contouring sections (14, 15, 16), which contouring sections (14, 15, 16) are alternatingly arranged on opposite longitudinal sides of the flow restrictor (5) and **in that** openings in this V-shaped or W-shaped contouring sections (14, 15, 16) point in a direction of the flow restrictor (5).

4. Insert unit as claimed in any one of claims 1 to 3, **characterised in that** the flow restrictor (5), in the through-flow direction, is held in the through-flow opening (4) in an immovable manner and, transversely with respect to the through-flow direction, in an elastically deformable manner.

5. Insert unit as claimed in claim 4, **characterised in that** the flow restrictor (5) is supported on a on a perforated structure or grid structure (17) which is arranged in the region of the through-flow opening (4).

6. Insert unit as claimed in any one of claims 1 to 5, **characterised in that** the flow restrictor (5) is secured, on the inflow side, in the direction opposite to the through-flow direction in the through-flow opening (4) by means of at least one holding-down unit (20).

7. Insert unit as claimed in any one of claims 1 to 6, **characterised in that** the insert housing (2) is releasably connectable, on the inflow side, to an attachment screen or filter screen (21).

8. Insert unit as claimed in claim 7, **characterised in that** the at least one holding-down unit (20) is provided on the outflow side on the attachment screen or filter screen (21).

9. Insert unit as claimed in claim 8, **characterised in that** the at least one holding-down unit (20) is configured as a holding-down pin which is oriented in the through-flow direction and is integrally formed on the attachment screen or filter screen (21).

10. Insert unit as claimed in any one of claims 1 to 9, **characterised in that** the web ends or string ends (6, 7) of the web-shaped or string-shaped flow restrictor (5) comprise a thickened portion, and **in that** the thickened portions of the flow restrictor (5) are held in holding openings (18, 19) of the through-flow regulator (3).

11. Insert unit as claimed in claim 10, **characterised in that** the through-flow opening (4) issues, on both sides of the wall sections (8, 9) thereof which are transversely oriented with respect to the longitudinal extension, in the holding openings (18, 19).

12. Insert unit as claimed in any one of claims 1 to 11, **characterised in that** the insert housing (2) has, at least in a partial region, a rectangular cross-section, and **in that** to this end the longitudinal sides of the insert housing have a longer length compared to the broad sides transversely oriented with respect to the longitudinal extension of the insert housing (2).

13. Insert unit as claimed in any one of claims 1 to 12, **characterised in that** the insert unit (1) comprises a jet regulator (22) which, in the direction of flow, is preferably connected downstream of the through-flow regulator (3).

14. Insert unit as claimed in claim 13, **characterised in that** the insert housing (2) is configured in multiple parts and comprises a flow regulator housing (27) and also a jet regulator housing (28) which is preferably releasably connectable to the flow regulator housing (27).

15. Insert unit as claimed in claim 13 or 14, **characterised in that** the jet regulator (22) is formed as an aerated jet regulator (22) which comprises a jet splitter (23) which divides the inflowing water into a multiplicity of individual jets, and **in that** the insert housing (2) has at least one aeration opening (29) which is arranged in a housing partial region immediately downstream of the jet splitter (23).

16. Insert unit as claimed in any one of claims 1 to 15, **characterised in that** the flow restrictor (5) comprises, at least in a partial region arranged particularly between the web ends or string ends (6, 7) thereof, a round or oval cross section.

## Revendications

1. Unité d'insert sanitaire (1) avec un boîtier d'insert (2) qui peut être inséré dans une conduite d'alimentation sanitaire et qui présente un régulateur de débit (3) qui comporte au moins une ouverture de passage (4) traversée par un fluide, ouverture de passage (4) dans laquelle il est prévu un élément d'étranglement (5) qui est disposé dans un plan de montage orienté transversalement à la direction d'écoulement, dans laquelle il est prévu au moins une fente de commande (12, 13) qui est disposée entre une paroi (10, 11) au moins localement profilée ou façonnée limitant l'ouverture de passage (4) et un côté extérieur voisin de l'élément d'étranglement (5) et dans laquelle l'élément d'étranglement (5) est déformable élastiquement sous la pression du fluide en écoulement de telle manière que la section transversale libre de la fente de commande (12, 13) se rétrécisse par adaptation de l'élément d'étranglement (5) dans le profil et le contour de la paroi (10, 11) au moins localement profilée ou façonnée, **caractérisée en ce que** l'ouverture de passage (4) est configurée comme un trou oblong orienté avec son extension longitudinale transversalement à la direction d'écoulement, **en ce que** l'élément d'étranglement (5) est réalisé en forme de barrette ou de cordon et **en ce que** l'élément d'étranglement (5) est maintenu avec ses extrémités de barrette ou de cordon (6, 7) sur les parties de paroi (8, 9) orientées transversalement à l'extension longitudinale de l'ouverture de passage (4), de telle manière que l'élément d'étranglement (5) soit, dans la région du trou oblong, orienté selon l'extension longitudinale de celui-ci.

2. Unité d'insert selon la revendication 1, **caractérisée en ce que** l'élément d'étranglement (5) disposé dans ladite au moins une ouverture de passage (4) limite de part et d'autre de ses côtés longitudinaux, entre lui-même et la paroi voisine (10, 11), respectivement une fente de commande (12, 13).

3. Unité d'insert selon la revendication 1 ou 2, **caractérisée en ce que** le contour des parois disposées sur les deux côtés longitudinaux de l'élément d'étranglement comporte des parties de contour en forme de V ou de W (14, 15, 16), parties de contour (14, 15, 16) qui sont disposées en alternance sur des côtés longitudinaux opposés de l'élément d'étranglement (5) et **en ce que** les ouvertures de ces parties de contour en forme de V ou de W (14, 15, 16) sont orientées en direction de l'élément d'étranglement (5).

4. Unité d'insert selon l'une quelconque des revendications 1 à 3, **caractérisée en ce que** l'élément d'étranglement (5) est maintenu dans l'ouverture de passage (4) de façon immobile dans la direction d'écoulement et de façon élastiquement déformable transversalement à la direction d'écoulement.

5. Unité d'insert selon la revendication 4, **caractérisée en ce que** l'élément d'étranglement (5) est appliqué sur une structure (17) perforée ou de grille disposée dans la région de l'ouverture de passage (4).

6. Unité d'insert selon l'une quelconque des revendications 1 à 5, **caractérisée en ce que** l'élément d'étranglement (5) est fixé côté amont dans l'ouverture de passage (4) au moyen d'au moins un organe de serrage (20) à l'opposé de la direction d'écoulement.

7. Unité d'insert selon l'une quelconque des revendications 1 à 6, **caractérisée en ce que** le boîtier d'insert (2) peut être assemblé de façon séparable côté amont avec un tamis d'entrée ou de filtre (21).

8. Unité d'insert selon la revendication 7, **caractérisée en ce que** ledit au moins un organe de serrage (20) est prévu côté aval sur le tamis d'entrée ou de filtre (21).

9. Unité d'insert selon la revendication 8, **caractérisée en ce que** ledit au moins un organe de serrage (20) est configuré comme un axe de serrage orienté dans la direction d'écoulement et formé d'une pièce sur le tamis d'entrée ou de filtre (21).

10. Unité d'insert selon l'une quelconque des revendications 1 à 9, **caractérisée en ce que** les extrémités de barrette ou de cordon (6, 7) de l'élément d'étranglement en forme de barrette ou de cordon (5) présentent une surépaisseur et **en ce que** les surépaisseurs de l'élément d'étranglement (5) sont maintenues dans des ouvertures de retenue (18, 19) du régulateur de débit (3).

11. Unité d'insert selon la revendication 10, **caractérisée en ce que** l'ouverture de passage (4) débouche, de part et d'autre sur ses parties de paroi (8, 9) orientées transversalement à l'extension longitudinale, dans les ouvertures de retenue (18, 19).

12. Unité d'insert selon l'une quelconque des revendications 1 à 11, **caractérisée en ce que** le boîtier d'insert (2) présente une section transversale rectangulaire dans au moins une région partielle et **en ce que** les côtés longitudinaux du boîtier d'insert présentent à cet effet une plus grande longueur par rapport aux côtés orientés en largeur transversalement à l'extension longitudinale du boîtier d'insert (2).

13. Unité d'insert selon l'une quelconque des revendications 1 à 12, **caractérisée en ce que** l'unité d'insert (1) présente un régulateur de jet (22) qui est de préférence placé en aval du régulateur de débit (3) dans la direction d'écoulement.

14. Unité d'insert selon la revendication 13, **caractérisée en ce que** le boîtier d'insert (2) est réalisé en plusieurs parties et présente un boîtier de régulateur de débit (27) ainsi qu'un boîtier de régulateur de jet (28) pouvant être assemblé, de préférence de façon séparable, au boîtier de régulateur de débit (27).

15. Unité d'insert selon la revendication 13 ou 14, **caractérisée en ce que** le régulateur de jet (22) est constitué par un régulateur de jet aéré (22) qui présente un brise-jet (23) divisant le flux d'eau entrant en une multiplicité de jets individuels et **en ce que** le boîtier d'insert (2) comporte au moins une ouverture d'aération (29) qui est disposée dans une région partielle du boîtier qui suit immédiatement le brise-jet (23).

16. Unité d'insert selon l'une quelconque des revendications 1 à 15, **caractérisée en ce que** l'élément d'étranglement (5) présente une section transversale ronde ou ovale au moins dans une région partielle disposée en particulier entre ses extrémités de barrette ou de cordon (6, 7).
